# EUROPEAN PATENT APPLICATION

(11) **EP 1 410 926 A2**
(43) Date of publication of application: **21.04.2004**
(21) Application number: 03023184.9
(22) Date of filing: 13.10.2003
(51) Int. Cl.: B60B 29/00

(54) **Apparatus for loosening wheel bolts, particulary for heavy vehicles**

(30) Priority: 15.10.2002 IT mi20022191
(71) Applicant: Cagna, Mario, 25062 Concesio (Prov. of Brescia) (IT)
(72) Inventor: Cagna, Mario, 25062 Concesio (Prov. of Brescia) (IT)
(74) Representative: Modiano, Guido, Dr.-Ing.

(57) **Abstract**

An apparatus for loosening wheel bolts, particularly for heavy vehicles, comprising a supporting frame (2) that accommodates a lifting device (10) connected to kinematic means (20) that engage an actuation bar (30) that is rotatably supported by the frame (2) and can engage a bush (40) that can be coupled to a bolt (41) of a wheel (42) of a heavy vehicle or the like.

## Description

The present invention relates to an apparatus for loosening wheel bolts, particularly for heavy vehicles.

As is known, a currently outstanding problem relates to unscrewing bolts of wheels of trucks and the like, since such bolts often tend to seize and accordingly it is not possible to easily release them, for example in case of a punctured tire, with ordinary manual means, therefore often forcing a resort to rescue services.

The aim of the invention is to eliminate the drawbacks mentioned above by providing an apparatus for loosening wheel bolts, particularly for heavy vehicles, that allows to manually produce the effort required to loosen a bolt of a wheel of a truck and the like.

Within this aim, an object of the invention is to provide an apparatus that allows, with limited manual effort, to apply a powerful torque that achieves loosening of the bolt even in the most critical conditions.

Another object of the present invention is to provide an apparatus that thanks to its particular constructive characteristics is capable of giving the greatest assurances of reliability and safety in use.

Another object of the present invention is to provide an apparatus for loosening wheel bolts, particularly for heavy vehicles and the like, that can be easily obtained starting from commonly commercially available elements and materials and is also competitive from a merely economical point of view.

This aim and these and other objects that will become better apparent hereinafter are achieved by an apparatus for loosening wheel bolts, particularly for heavy vehicles, characterized in that it comprises a supporting frame that accommodates a lifting device that is connected to kinematic means that engage an actuation bar that is rotatably supported by said frame and can engage a bush that can be coupled to a bolt of a wheel of a heavy vehicle and the like.

Further characteristics and advantages of the invention will become better apparent from the description of a preferred but not exclusive embodiment of an apparatus for loosening wheel bolts, particularly for heavy vehicles, illustrated by way of non-limitative example in the accompanying drawings, wherein:

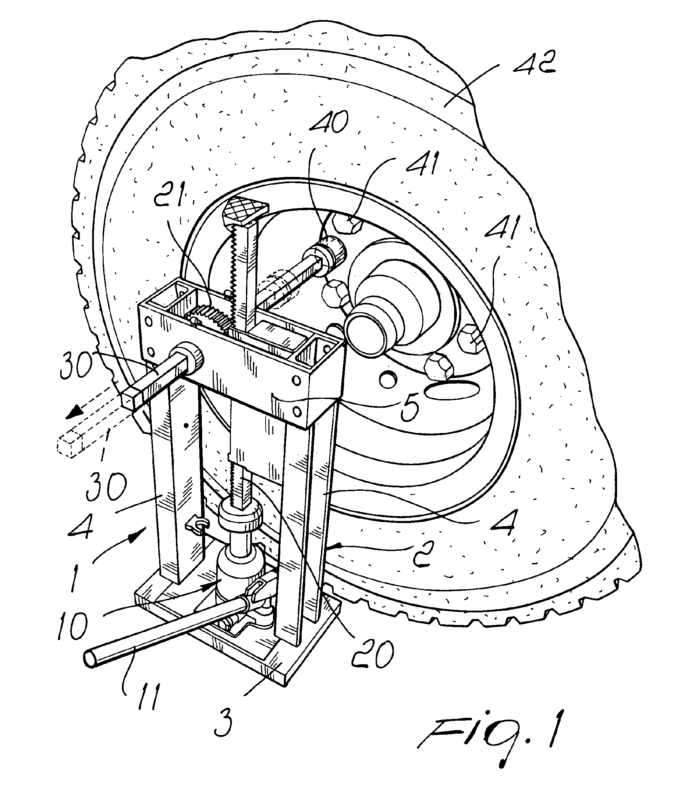

Figure 1 is a schematic exploded perspective view of the apparatus according to the invention, arranged at the wheel of a heavy vehicle;

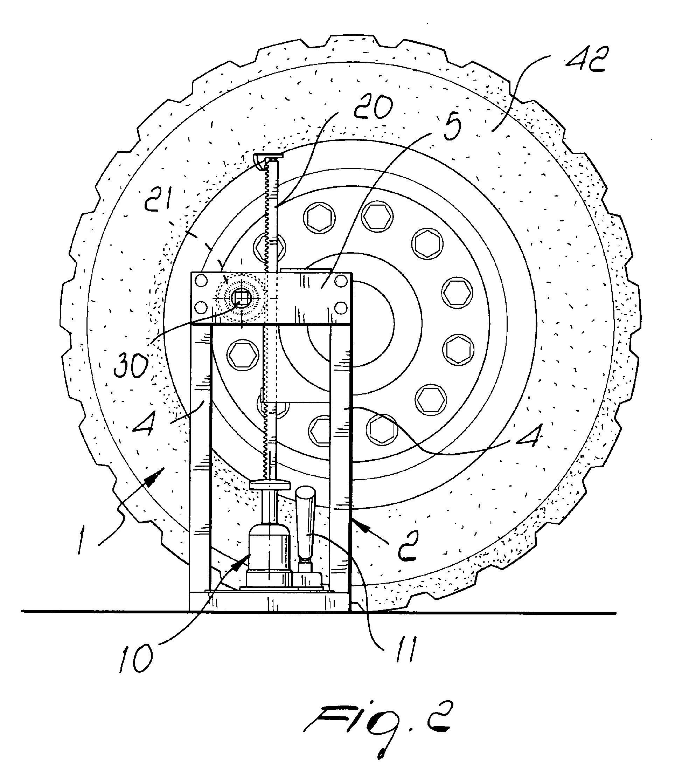

Figure 2 is a front view of the apparatus;
Figure 3 is a view of a detail of the placement of the bush on the bolt;

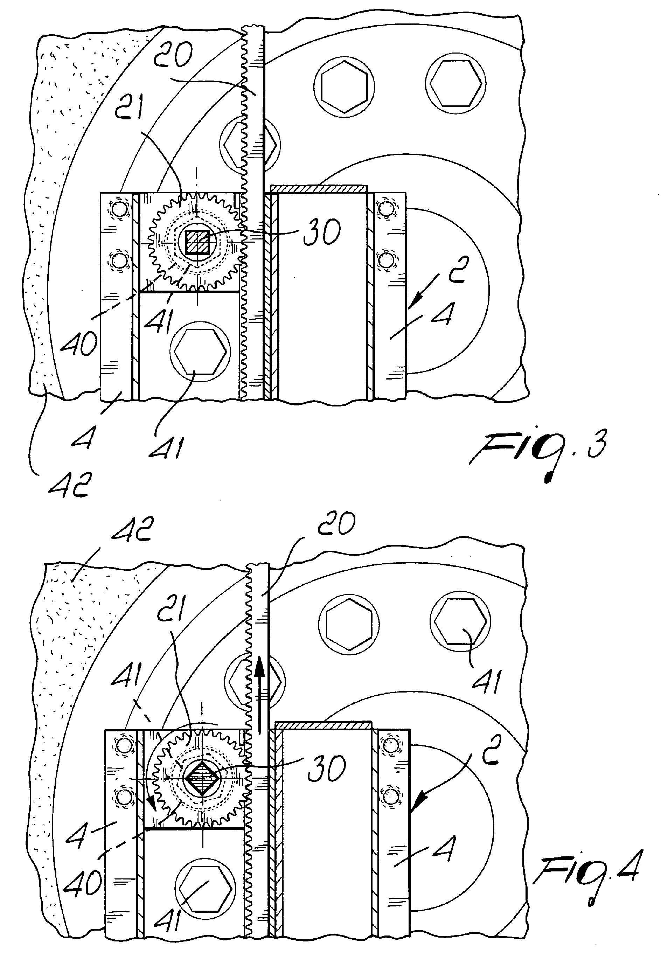

Figure 4 is a schematic view of the unscrewing of a bolt.

With reference to the figures, the apparatus for loosening wheel bolts, particularly for wheels of trucks and the like, generally designated by the reference numeral 1, comprises a supporting frame 2, which in a preferred but non-limitative embodiment is constituted by a base plate 3 provided with posts 4 that are joined by an upper cross-member 5. Advantageously, the upper cross-member 5 can be movable in order to adjust its vertical position.

The frame 2 supports a lifting device, which is advantageously constituted by a mechanical jack or a hydraulic jack 10, or by other similar elements that typically can be actuated by means of a lever 11.

The lifting device is connected to kinematic means, constituted by a rack 20 that can slidingly engage the upper cross-member 5 and meshes with a toothed pinion 21, which is provided with a square hole for engaging an actuation bar 30 that has a square cross-section and can be engaged, at one of its ends, with a bush 40 that can be coupled to the bolts 41 provided on a wheel 42 of a heavy vehicle and the like.

In order to remove the wheel of a heavy vehicle, if another mechanical jack is available in addition to the one provided with the vehicle, it is possible to first raise the wheel of the vehicle a few centimeters off the ground by means of the vehicle jack and then arrange the apparatus as close as possible to the wheel and to the left.

The bolt to be unscrewed must be located approximately ten centimeters higher up than the center of the wheel.

First the bush 40 arranged at a first end of the bar 30, is fitted over the bolt and the mechanical jack 10 is actuated by means of the lever 11, producing the translational motion of the rack 20, which by rising turns the pinion 21 counterclockwise; at the same time, the wheel 42 of the vehicle, which is free to rotate, will attempt to rotate to the left and downward, blocking the apparatus between the ground and the bolt; by continuing to operate the lever 11, the bolt begins to be unscrewed.

Once the bolt has been unscrewed, in order to unscrew the next bolt it is necessary to open the valve of the jack and remove the bush 40 from the bolt by means of the bar 30.

After returning the rack to the retracted position, to unscrew the next bolt one turns the wheel 42 in order to place the bolt to be unscrewed at the bush 40, which engages the bolt by making the bar 30 slide.

It is then possible to repeat the operation previously described in order to unscrew all the bolts.

If a single jack is available and accordingly it is not possible to lift the wheel 42 to be removed, it is advisable to have an upper cross-member 5 that can perform a translational motion with respect to the posts 4 and can then be locked in the intended position.

In order to perform disassembly, the upper cross-member is released and, after engaging the selected bolt by means of the bush 40, the lever 11 of the jack is operated until the upper cross-member, by rising, remains under stress; by continuing to operate the jack, if the bolt does not loosen or the wheel attempts to rise, in order to avoid damaging the apparatus it is advisable to block the cross-member 5 with respect to the posts 4 and to continue to operate the lever 11 of the jack 10 until the rack 20, by turning the pinion 21, loosens the bolts.

In this manner it is possible to disassemble the wheel by using directly the jack provided with the vehicle before lifting said vehicle.

This operation is just as effective as the preceding one but is slightly slower.

With the device described above it is therefore possible to apply powerful torques, which allow to unscrew any bolt, by applying relatively low manual forces, since it is possible to take advantage of the presence of the mechanical or hydraulic jack 10.

It should also be added to the above that if one wishes to apply a tightening force it is sufficient to connect the bush 40 to the second opposite end of the bar 30, so that when the rack 20 is moved upward, the bush turns clockwise and accordingly the bolt is screwed on.

From the above description it is therefore evident that the invention achieves the proposed aim and objects, and in particular the fact is stressed that an extremely simple and compact apparatus is provided which allows, with very limited manual effort, to apply very powerful torques, which allow to loosen any bolt of wheels of heavy vehicles.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements.

The disclosures in Italian Patent Application No. MI2002A002191 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An apparatus for loosening wheel bolts, particularly for heavy vehicles, **characterized in that** it comprises a supporting frame (2) that accommodates a lifting device (10) connected to kinematic means (20) that engage an actuation bar (30) that is rotatably supported by said frame (2) and can engage a bush (40) that can be coupled to a bolt (41) of a wheel (42) of a heavy vehicle or the like.

2. The apparatus according to claim 1, **characterized in that** said lifting device is constituted by a mechanical jack (10).

3. The apparatus according to the preceding claims, **characterized in that** said lifting device is constituted by a hydraulic jack (10).

4. The apparatus according to one or more of the preceding claims, **characterized in that** said supporting frame (2) comprises a base plate (3) provided with posts (4) that are joined by an upper cross-member (5).

5. The apparatus according to one or more of the preceding claims, **characterized in that** said upper cross-member (5) can perform a translational motion with respect to said posts (4) in order to adjust its vertical position.

6. The apparatus according to one or more of the preceding claims, **characterized in that** said kinematic means comprise a rack (20) that slidingly engages said upper cross-member (5) and engages a toothed pinion (21) that can engage said actuation bar (30).

7. The apparatus according to one or more of the preceding claims, **characterized in that** said toothed pinion (21) comprises a square hole and said actuation bar (30) has a substantially square cross-section.

8. The apparatus according to one or more of the preceding claims, **characterized in that** said bush (40) can be detachably engaged with a first end of said actuation bar (30) or the second, opposite one in order to loosen or tighten said bolt (41).

9. The apparatus according to one or more of the preceding claims, **characterized in that** said actuation bar (30) can slide axially with respect to said square hole.
